# EUROPEAN PATENT APPLICATION

(11) **EP 4 566 758 A1**
(43) Date of publication of application: **11.06.2025**
(21) Application number: 24205413.8
(22) Date of filing: 08.10.2024
(51) Int. Cl.: B25B 27/10, B21D 39/04, B23D 29/00, B25B 27/14, H01R 43/042

(54) **A PORTABLE ELECTRIC PRESSING TOOL**

(30) Priority: 07.12.2023 GB 202318725
(71) Applicant: Black & Decker, Inc., New Britain, CT 06053 (US)
(72) Inventor: HEEP, Tobias, 65589 Steinbach (DE); KRISCHE, Fridtjof, 55122 Mainz (DE); KOHLHAAS, Benedikt, 64295 Darmstadt (DE)
(74) Representative: SBD IPAdmin

(57) **Abstract**

A portable electric pressing tool comprising an electric motor arranged at least partially within the handle of the tool and having a motor output shaft extending along a first axis along the handle, a pressing mechanism having a pair of jaws and which is operatively coupled to the motor output shaft via a transmission of the tool which in use causes relative movement of the jaws between first and second relative positions, the transmission comprising a bevel gear arrangement for redirecting torque flowing along the first axis into the bevel gear arrangement so that torque output from the bevel gear arrangement flows into a conversion mechanism of the transmission for converting torque into linear force along a second axis for causing said relative movement between the jaws, wherein the motor output shaft is arranged at an angle of 45 degrees to 135 degrees relative to the second axis.

## Description

### Field

The present disclosure relates to a portable electric pressing tool.

### Background

Polymer tubing is often used in construction as an alternative to copper pipes which are more expensive. Such polymer tubing is attached to fittings using a crimped connector which is compressed into fixed engagement with the polymer tubing using a pressing tool such as the portable electric crimping tool in EP3075492A1 which has a linear configuration so cannot be used in certain usage contexts where space is at a premium. There is thus a need for a shorter crimping tool which can be used in tighter spaces.

### Summary

According to the present invention there is provided a portable electric pressing tool according to claim 1 wherein optional features thereof are defined in the dependent claims.

### Brief Description of the Drawings

Various aspects and embodiments of the invention will now be described by way of non-limiting example with reference to the accompanying drawings, in which:
Fig. 1 is a side view of a portable electric pressing tool having a pressing mechanism;
Fig. 2 is a cross-sectional side view of the portable electric pressing tool in Fig. 1 with the pressing mechanism in an open position;
Fig. 3 is a cross-sectional side view of the portable electric pressing tool in Fig. 1 with the pressing mechanism in a closed position;
Fig. 4 is a cross-sectional view looking down through the portable electric pressing tool in Fig. 2 through the axis B-B; and
Fig. 5 is a cross-sectional view looking right through the portable electric pressing tool in Fig. 2 through the axis A-A.

### Detailed Description

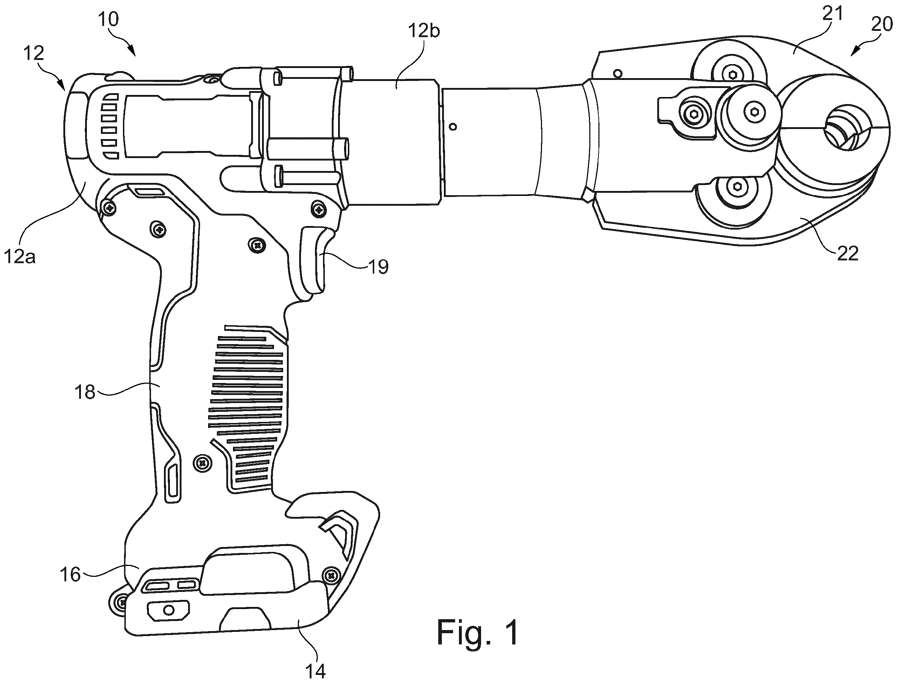

Fig. 1 shows a side view of a portable electric pressing tool 10. The tool 10 has a housing 12 made of first and second parts 12a, 12b. The first housing part 12a is a plastic clam shell type housing part which defines the tool handle 18. The second housing part 12b is formed of metal and is partially surrounded by the first housing part 12a. A battery 14 is releasably connected to a base 16 of the handle 18 via a battery attachment portion. A trigger 19 is also provided.

The tool 10 has an electric motor 46 located within the handle 18 whereby a user's hand surrounds the motor when gripping the handle 18. The electric motor 46 has a motor output shaft 48 which extends along a first axis A-A along the length of the handle 18.

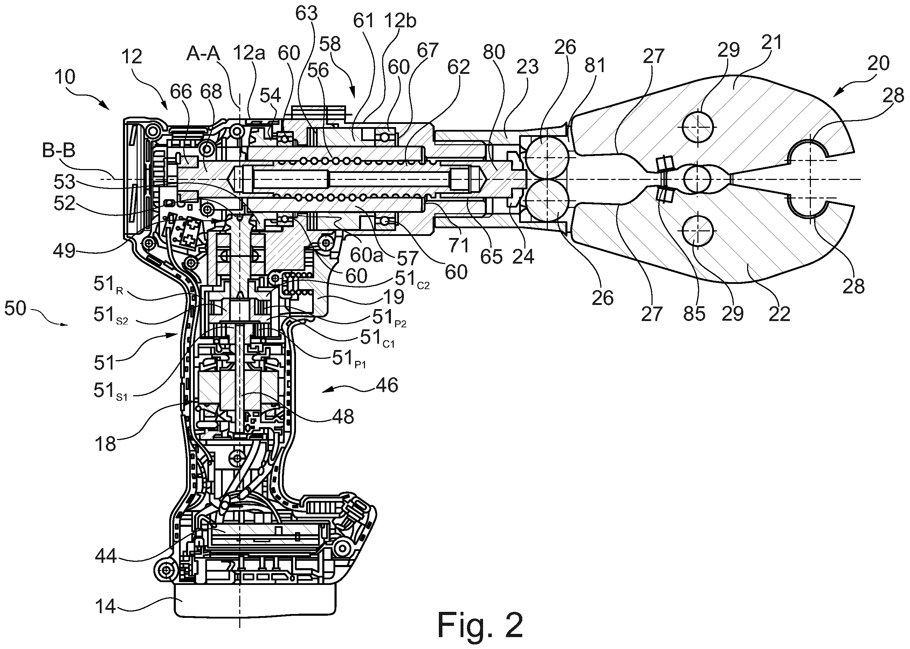

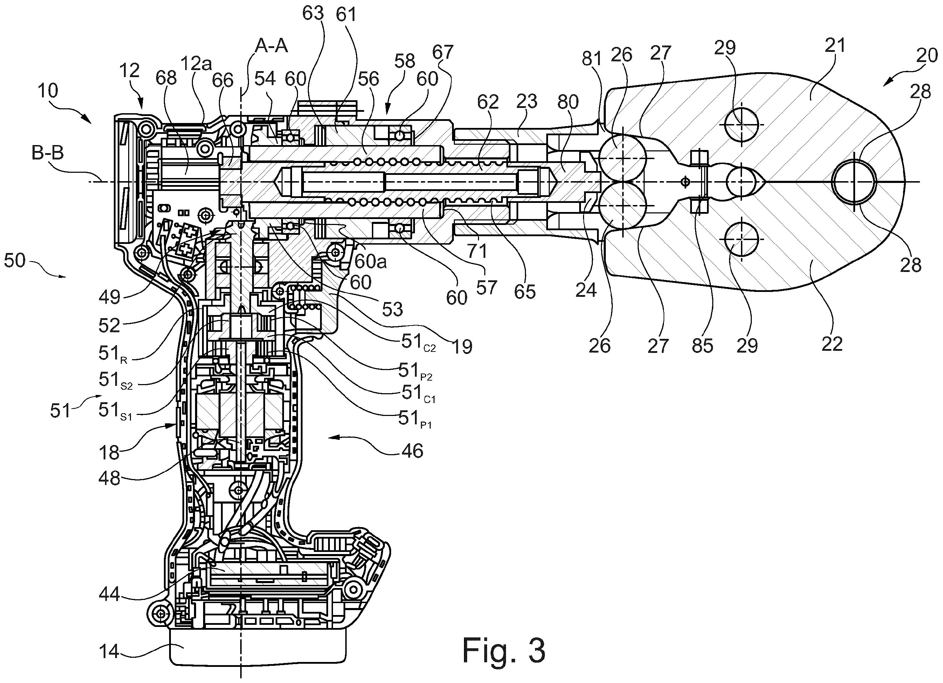

The tool 10 has a pressing mechanism 20 which is mounted to the metal housing part 12b in a manner described later. The pressing mechanism 20 has a pair of jaws 21, 22 which are operatively coupled to the motor output shaft 48 via a transmission 50 for causing the jaws to selectively open and close. In the embodiment shown in the drawings the jaws 21, 22 are configured for compressing objects like connectors onto a portion of polymer tubing. Figs. 2 and 3 show the jaws 21, 22 in open and closed configurations respectively.

The transmission 50 causes torque from the electric motor 46 to be converted into linear force for causing the jaws 21, 22 to selectively move relative to each other between open and closed configurations. As will be described in more detail, the transmission 50 has a planetary gear arrangement 51, a bevel gear arrangement 49 and a conversion mechanism 58 whereby torque output from the electric motor 46 flows along the first axis A-A through the planetary gear arrangement 51 into the bevel gear arrangement 49 which redirects the flow of torque substantially 90 degrees so that torque flowing out of the bevel gear arrangement 49 flows along a second axis B-B into the conversion mechanism 58, wherein the conversion mechanism converts torque into linear force for actuating the jaws 21, 22 of the pressing mechanism 20.

Referring to Figs. 2 to 4 the tool 10 has a controller 44 for determining that the trigger 19 has been pulled. In response to the controller 44 determining that the trigger 19 has been pulled, the controller 44 generates a signal to activate the electric motor 46, which is a DC brushless motor such as the BL41 DC brushless motor designed by Stanley Black & Decker Inc. and used in some commercially available DEWALT^{®} branded power tools.

The motor 46 is powered by battery 14. The battery 14 is releasably connected to the base 16 of the handle 18 via the battery attachment portion arranged on the handle 18. The battery attachment portion is arranged so that a notional line extending between the battery attachment portion and the motor output shaft 48 extends along the first axis A-A.

Torque from the motor output shaft 48 is transferred via the planetary gear arrangement 51 to an input pinion 52 of the bevel gear arrangement 49. The planetary gear arrangement 51 is configured to reduce output speed while increasing torque. The planetary gear arrangement 51 is located within the handle 18 of the tool 10. The motor output shaft 48 drives an input sun gear 51_{S1} of the first stage of the planetary gear arrangement 51. The input sun gear 51_{S1} meshes with a plurality of first stage planet gears 51_{P1} which mesh with a stationary outer ring gear 51_{R} and are coupled to a first stage carrier 51_{C1}. An axial extension of the first stage carrier 51_{C1} is the input sun gear 51_{S2} of the second stage of the planetary gear arrangement 51. The input sun gear 51_{S2} meshes with a plurality of second stage planet gears 51_{P2} which mesh with the stationary outer ring gear 51_{R} and are coupled to a second stage carrier 51_{C2}. An axial extension of the second stage carrier 51_{C2} is rotationally fixed to the input pinion 52 of the bevel gear arrangement 49. The input pinion 52 of the bevel gear arrangement 49 thus rotates at a lower speed than the motor output shaft 48 however with an increased torque relative to the motor output shaft 48.

By locating the output shaft 48 of the electric motor 46, the planetary gear arrangement 51, the input pinion 52 of the bevel gear arrangement 49 and the battery attachment portion on the first axis A-A extending along the longitudinal length of the handle 18 weight distribution of internal features of the tool 10 is improved so the tool 10 feels balanced in a user's hand. Also by providing the electric motor 46 and planetary gear arrangement 51 within the handle 18 this leaves more space available within the housing 12 above the handle 18 which means there is more freedom to position internal features of the tool 10 in positions which improve overall weight distribution of the tool 10 while maintaining functionality.

Continuing with reference to Figs. 2-4 the bevel gear arrangement 49 has a bevel gear 53 meshed with the input pinion 52 for receiving torque therefrom. An axial extension of the bevel gear 53, hereafter the driving sleeve 54, is rotationally fixed relative to an input sleeve 56 of a ball screw mechanism 58. The driving sleeve 54 and input sleeve 56 are fixed relative to each other due to a friction fit arrangement. An internal surface of the input sleeve 56 comprises a threaded surface. The outer surface of the input sleeve 56 is supported by bearings 60 which enable rotation of the input sleeve 56 with respect to the housing 12. End surfaces of the input sleeve 56 are supported by axial bearings to enable rotation while providing axial support such as the axial bearing denoted 71 in Figs. 2 to 4.

In a radial direction the bearings 60 are located between the input sleeve 56 and the inner surface of the metal housing part 12b. In an axial direction the left-side bearings 60 in the drawings are arranged as follows: one side of the inner race of such bearings 60 engages the driving sleeve 54 whereas the other side of the inner race engages an axial bearing 60a received in a step shaped portion of the inner wall of the metal housing part 12b and the outer race engages the inner wall of the metal housing part 12b. Now considering the right-side bearings 60 in the drawings in an axial direction these are arranged as follows: one side of the inner race of such bearings 60 engages a bearing engagement sleeve 61 which is rotatably fixed to the input sleeve 56 via a friction fit and the other side of the inner race engages an axial bearing 67 received in a step shaped portion of the inner wall of the metal housing part 12b, whereas the outer race engages the inner wall of the metal housing part 12b. The opposite side of bearing engagement sleeve 61 engages an axial bearing 63 and indeed lips around the outer edge of the axial bearing 63 for preventing the axial bearing 63 from touching the inner side of the metal housing part 12b.

A threaded rod 62 is mounted within the input sleeve 56, which extends through the input sleeve 56. A plurality of balls, such as metal ball bearings, ride in the opposing threaded surfaces of the input sleeve 56 and threaded rod 62, thereby defining the ball screw mechanism 58.

When the input sleeve 56 is rotatably driven by the driving sleeve 54 this causes axial movement of the threaded rod 62. In other words, torque from the electric motor 46 is transferred through the planetary gear arrangement 51, through the bevel gear arrangement 49 to the input sleeve 56, whereby rotation thereof causes axial movement of the threaded rod 62. The threaded rod 62 is configured to move along the second longitudinal axis B-B of the tool 10. The threaded rod 62 can move forwards or backwards along the axis B-B depending on the motor driving direction for causing the jaws 21, 22 to selectively open and close.

A volume 68 is provided within the housing 12 for accommodating the threaded rod 62 when retracted into the tool 10.

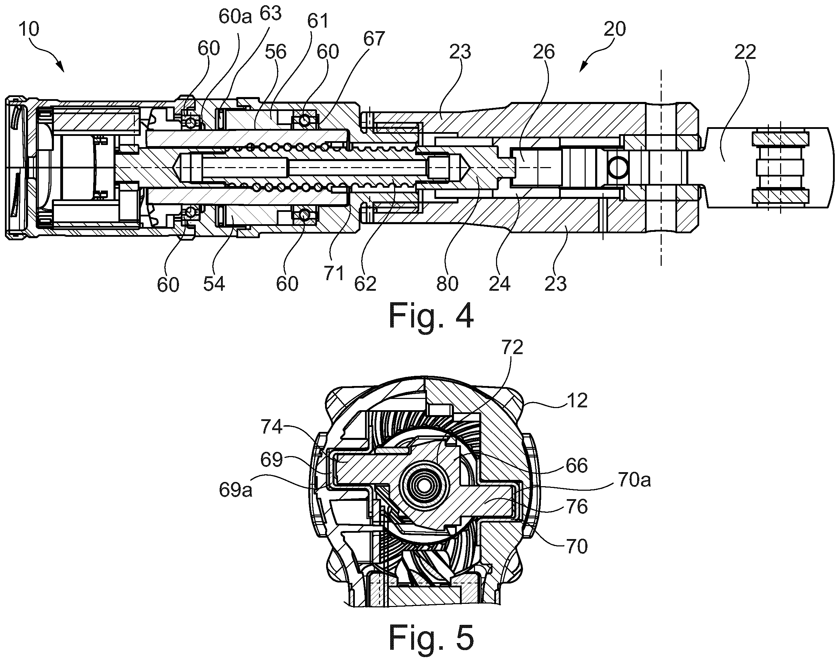

Fig. 5 shows that an anti-rotation bar 66 is engaged with the threaded rod 62 in a manner whereby the anti-rotation bar 66 is axially and rotationally fixed to the threaded rod 62. As the input sleeve 56 is rotated the anti-rotation bar 66 cooperates with the threaded rod 62 and the first and second slots 69, 70 within the housing 12 (more specifically with metallic liner plates 69a, 70a in the slots 69, 70 to facilitate sliding and minimise wear) for causing the threaded rod 62 to move axially along the axis B-B. The anti-rotation bar 66 is rotationally fixed with respect to the housing 12 so it slides relative to the housing 12 on the metallic liner plates 69a, 70a through the first and second slots 69, 70 during axial movement of the threaded rod 62.

The anti-rotation bar 66 comprises a central hole 72 with a threaded inner surface which is tightly threadably engaged with a reciprocal threaded portion at an end of the threaded rod 62 as shown in Figs. 2-3. The threaded rod 62 extends through an opening 65 defined by the metal housing part 12b and is coupled to the pressing mechanism 20. Figs. 2-4 show that the aforementioned axial bearing 71 additionally supports the threaded rod 62.

As already mentioned the tool 10 has a pressing mechanism 20 which is mounted to the metal housing part 12b. A first metal housing part 23 of the pressing mechanism 20 has an internally threaded opening which is threadably engaged with an externally threaded portion of the metal housing part 12b which defines the opening 65 for securing the pressing mechanism 20 in place. On an opposite side of the first metal housing part 23 is provided another internally threaded opening which is threadably engaged with an externally threaded portion of a second metal housing part 81 of the pressing mechanism 20.

The second metal housing part 81 of the pressing mechanism 20 is what the jaws 21, 22 are pivotally attached to. A pin 29 extends through each of the jaws for separately pivotally mounting the jaws 21, 22 to the second metal housing part 81. It will be appreciated that the pins extend along an axis perpendicular to the aforementioned axis B-B. How the jaws 21, 22 are selectively actuated will now be explained. Namely the second metal housing part 81 of the pressing mechanism 20 defines a space within which a driver 80 of the pressing mechanism 20 can be moved back and forth for physically actuating the jaws 21, 22.

The driver 80 of the pressing mechanism 20 is fixed to the threaded rod 62 such as by threaded engagement between such components whereby axial movement of the threaded rod 62 causes corresponding axial movement of the driver 80. The driver 80 comprises a pair of rollers 26 each having an axis of rotation perpendicular to the axis B-B along which the threaded rod 62 moves in use. More specifically, the rollers 26 are axially fixed relative to the threaded rod 62 but can nevertheless rotate. As such axial movement of the threaded rod 62 causes corresponding axial movement of the rollers.

In use when the threaded rod 62 is caused to move towards the jaws 21, 22 the rollers 26 are urged against inner surfaces on the left-side of the jaws in Figs. 2 and 3 which causes the jaws 21, 22 to pivot about the pins 29 and for the right-side of the jaws 21, 22 to be urged together.

In other words the jaws 21, 22 each comprise a distal portion comprising a pressing surface 28 and a proximal portion comprising a cam surface 27, wherein the distal portion and the proximal portion of each jaw are located on opposite sides of the jaw's pin 29.

In an open configuration of the pressing mechanism 20 the distal portions of the jaws 21, 22 provided with the pressing surfaces 28 are spaced apart. In a closed configuration of the pressing mechanism 20 the distal portions of the jaws 21, 22 provided with the pressing surfaces 28 are pressed towards each other wherein an object placed between the pressing surfaces 28 can be pressed e.g. a crimping ring can be crimped.

The jaws 21, 22 are biased to the open configuration by a biasing member 85 such as a spring positioned between the jaws 21, 22. The biasing member 85 is coupled to inner portions of the cam surfaces 27 thereby biasing the jaws 21, 22 towards the open configuration. While the threaded rod 62 is being retracted after a pressing operation and the rollers 26 are caused to gradually move in a direction away from the jaws 21, 22 the biasing member 85 causes the jaws to progressively open wherein the tool can easily be used again by placing the open jaws 21, 22 around another object to be pressed.

As mentioned previously, the tool 10 comprises a controller 44 to control operation of the motor 46 in use to implement a pressing operation. Upon pulling the tigger 19 the controller 44 initiates the electric motor 46 for causing the rollers 26 of the driver 80 to be urged against the cam surfaces 27 of the jaws 21, 22 for causing a pressing operation. Upon releasing the trigger 19 the controller 44 causes the electric motor to rotate in the opposite direction for causing the rollers 26 of the driver 80 to be moved in a direction away from the jaws 21, 22 and for returning the tool 10 to a home configuration which it occupied before the trigger was initially pulled.

The controller 44 is configured to determine when the pressing mechanism 20 has been actuated sufficiently to press or crimp a connector. In some examples, the controller 44 receives one or more signals e.g., a voltage signal and / or a current signal from the electric motor 46 which the controller 44 can use to determine when the jaws 21, 22 have exerted a sufficient pressing force, like when motor current exceeds a predetermined threshold.

As a safety mechanism, a mechanical switch may be provided within the tool 10 for causing a reset operation upon the threaded rod 62 moving in a pressing direction beyond a predetermined amount. During a pressing stage of operation, the threaded rod 62 is moved towards the pressing mechanism 20. If the user does not release the trigger 19 eventually the first or second arm 74, 76 of the anti-rotation bar 66 will engage a mechanical switch, whereby upon the controller 44 detecting that the mechanical switch is activated it causes the electric motor 46 to reverse direction and returns to the tool 10 to the open configuration; a user must then release the trigger 19 before a subsequent pressing operation can be implemented. In some embodiments instead of a mechanical switch an optical sensor can be used for detecting the presence of the anti-rotation bar 66 or threaded rod 62 for initiating a reset operation.

Furthermore, in some embodiments a magnetic sensor is provided for detecting the presence of a magnet carried by the anti-rotation bar 66 for initiating a reset operation.

Moreover, designers are free to select a suitable way for the controller 44 to control operation of the electric motor 46 to implement a reset operation. In other words, designers are free to select a suitable way for the controller 44 to determine when the rollers 26 have returned to their home positions (the positions they occupied before the user initiated the pressing operation when the jaws 21, 22 were opened by their maximum amount like in Fig. 2).

For example, a mechanical switch (not shown) may be provided within the tool 10. Following a pressing operation, upon initiation of reverse movement of the electric motor 46 for causing a reset operation, the controller 44 is configured to detect output from the mechanical switch indicative that the first or second arm 74, 76 of the anti-rotation bar 66 actuates the mechanical switch, thereby indicating that the rollers 26 have returned to their home position. Alternatively, an optical sensor (not shown) may be provided within the tool 10 which generates output based on the presence or absence of the anti-rotation bar 66 or threaded rod 62 wherein based on output from the optical sensor the controller 44 can determine when the rollers 26 have returned to their home positions. In some embodiments a magnetic sensor is provided for detecting the presence of a magnet carried by the anti-rotation bar 66 for generating output indicative that the rollers 26 have returned to their home positions.

In closing it is here stated that the weight of the portable electric pressing tool 10 described herein in absence of a battery 14 is between 2.6kg to 3.5kg. Such a tool 10 has a length in a direction parallel to the second axis B-B between 280mm to 335mm and has a height in a direction parallel to the first axis A-A, in absence of a battery 14, between 200mm to 250mm in particular about 222mm. Furthermore such a tool 10 is configured to exert a force between the pressing surfaces 28 of the jaws 21, 22 ranging between 30kN to 60kN and the pushing force exerted by threaded rod 62 along the second direction B-B ranges between 30kN to 60kN. Such a tool 10 has a weight to pushing force ratio between 0.043 kg/kN to 0.175kg/kN.

These value ranges are advantageous because no known electromechanical portable pressing tool is so small in height and length, furthermore no known electromechanical portable pressing tool can realise such a small weight to pushing force ratio.

It will be appreciated that whilst various aspects and embodiments have heretofore been described the scope of the present invention is not limited thereto and instead extends to encompass all arrangements, and modifications and alterations thereto, which fall within the spirit and scope of the appended claims.

For example, while specific values of parameters (e.g. length, height, weight, pushing force, pressing force and power/weight ratio) were described in the paragraph preceding the one immediately above, it will be appreciated that the portable electric pressing tool 10 can be configured to have different parameters depending on the circumstances, meaning that manufacturers are free to design their tools 10 to meet the use context and limitations relevant to them including the materials available to build the tool 10 and cost considerations provided that their tool implements pressing functionality as descried herein.

In some embodiments the weight of the tool 10 can be between 1kg and 5kg. In some embodiments the tool 10 has a length in a direction parallel to the second axis B-B between 250mm to 350mm or between 200mm to 400mm. In some embodiments the tool 10 has a height in a direction parallel to the first axis A-A, in absence of a battery 14, of 150mm to 300mm or between 100mm to 400mm.

It will be appreciated that the planetary gear arrangement 51 between the motor output shaft 48 and the input pinion 52 of the bevel gear arrangement 49 may have just one gear stage or multiple gear stages depending on the torque output to be achieved by the planetary gear arrangement 51. Factors influencing the number of gear stages within the planetary gear arrangement 51 include, without limitation, the size of the gears, length of the handle 18, maximum motor torque, thickness of the input pinion 52 and friction between moveable features within the portable electric tool 10 to be manufactured. As such the planetary gear arrangement 51 in some tools 10 will only have a single planetary gear stage whereas other tools will have a plurality of planetary gear stages arranged in series.

Although the battery 14 up to now is said to be releasably connected to a base 16 of the handle 18 via a battery attachment portion in other embodiments the battery 14 may be permanently within the housing 12 and not removable and such tools must be capable of connecting to a power source to charge the battery.

The electric motor 46 has been described up to now as being located entirely within the handle 18. However, in some embodiments, the electric motor 46 can be located at least partly within the handle 18 meaning that part of the motor 46 is located in the handle where a user grips the tool in use whereas part of the motor 46 is located above the handle and thus above where a user grips the tool in use.

The electric motor 46 has up to now been described as a brushless DC motor however in other embodiments other suitable electric motors can be used instead such as a brushed motor having a motor output shaft driven by a stator and having at least one magnet on the motor output shaft.

It will be appreciated that in some embodiments the first and second metal housing parts 23, 81 of the pressing mechanism 20 can be formed as a single metal housing part.

As shown in Figs 1-5, the first axis A-A is arranged at an angle of 90 degrees relative to the second axis B-B. However, in other examples the first axis A-A is arranged at an angle of between 45 degrees to 135 degrees relative to the second axis B-B. Thereby, the motor output shaft 48 is also arranged at an angle of 45 degrees to 135 degrees relative to the second axis B-B. In one example, the motor output shaft 48 is arranged at an angle of 75 degrees to 110 degrees relative to the second axis B-B. In another example, the first axis A-A is arranged at any angle greater than 45 degrees and less than 180 degrees relative to the second axis B-B.

The planetary gear arrangement 51 has been described up to now as being located entirely within the handle 18. However, in some embodiments, the planetary gear arrangement 51 can be located at least partly within the handle 18 meaning that part of the planetary gear arrangement 51 is located in the handle where a user grips the tool in use whereas part of the planetary gear arrangement 51 is located above the handle and thus above where a user grips the tool in use.

The driving sleeve 54 and input sleeve 56 may be fixed relative to each other due to a friction fit arrangement. However, in other examples, the driving sleeve 54 and input sleeve 56 can be fixed together with other methods e.g., adhesive, welding, spline-fit engagement etc. Alternatively, the driving sleeve 54 and input sleeve 56 can be a single unitary element.

Although the jaws 21, 22 have been described up to now as pressing jaws the term pressing is not limited to compressing or crushing. Moreover crimping tools are just one implementation of a pressing tool whereas tools with jaws for compressing or crushing things other than crimping rings are also considered pressing tools. Jaws for compressing or crushing something e.g. compressing a crimping ring or other object are merely a sub-set of pressing jaws whereas the generality of pressing jaws extends to jaws that cut objects too. Jaws configured to cut an object are merely shaped such that when they press an object between them they cause the object to be cut as opposed to compressed or crushed. So in summary even though the portable electric pressing tool 10 has been described has having jaws 21, 22 with pressing surfaces 28 for compressing or crushing something e.g. a crimping ring it will be appreciated that the configuration of the jaws 21 can be changed depending on the intended purpose of the tool 10, wherein the tool 10 could be provided with jaws for compressing or crushing something or alternatively the tool 10 could be provided with jaws for cutting something. Alternatively the tool 10 could be provided with jaws configured to receive removable inserts wherein some inserts are shaped to enable the jaws to implement a compression or crushing operation whereas some inserts are shaped to enable the jaws to implement a cutting operation. Whether the tool 10 is configured to compress, crush or cut something between its jaws 21, 22 the tool 10 is still considered a pressing tool.

In some embodiments, the jaws 21,22 of the pressing mechanism 20 can be biased towards the closed position by a biasing member 85 such as a spring instead of being biased towards the open position. In such embodiments the user can open the jaws 21, 22 by pressing on an outer surface of each of the proximal portions of the jaws 21, 22.

The biasing member 85 is a coil spring, a leaf spring, or any other suitable resilient means for biasing the jaws 21, 22 to the open or closed position.

Finally, up to now the conversion mechanism 58 which converts torque originating from the electric motor into linear force for actuating the jaws 21, 22 of the pressing mechanism 20 is described as being a ball screw mechanism 58 However, alternatively, in some embodiments the tool 10 may have a roller screw mechanism (sometimes known as a planetary roller screw mechanism) instead of a ball screw mechanism for converting torque into linear force. A person skilled in the art will appreciate that this can be achieved by rotationally fixing the driving sleeve 54 to an input sleeve 56 of the roller screw mechanism; wherein a set of rollers (sometimes called planetary rollers) are provided between the internal surface of the input sleeve 56 and an external surface of the threaded rod 62. When the driving sleeve 54 is caused to rotate it drives rotation of the input sleeve 56 of the roller screw mechanism and thus via the rollers causes linear movement of the threaded rod 62 and thus causes actuation of the pressing mechanism 20. Roller screw mechanisms achieve higher pushing force relative to similarly sized ball screw mechanisms so by providing a tool with a roller screw mechanism a higher pressing force of the jaws will be enabled compared to using a similar sized ball screw mechanism.

Throughout this specification the jaws 21, 22 are described having a cam surface 27 with a profile such that the rollers 26 push the jaws 21, 22 from their open configuration in Fig. 2 to their closed configuration in Fig. 3 upon movement of the threaded rod 62, and thus rollers 26, from left-to-right in Figs. 1 to 3; in other words so far the pressing mechanism 20 has been described as being engaged by pushing the jaws 21, 22 shut upon movement of the threaded rod 62 and rollers 26 from left-to-right in Figs. 1 to 3. However in other embodiments the jaws 21, 22 may alternatively have a cam surface 27 with a profile such that the rollers 26 pull the jaws 21, 22 from their open configuration in Fig. 2 to their closed configuration in Fig. 3 upon movement of the threaded rod 62, and thus rollers 26, from right-to-left in Figs. 1 to 3; in other words the pressing mechanism 20 may be engaged by pulling the jaws 21, 22 shut upon movement of the threaded rod 62 and rollers 26 from right-to-left in Figs. 1 to 3 which can be achieved by the cam surfaces 27 of the jaws 21, 22 progressively nearing each other along a direction from right-to-left in Figs. 1 to 3 so that movement of the rollers 26 to the left in Figs. 1 to 3 progressively urges the proximal portions of the jaws 21, 22 having the cam surfaces 27 apart and the distal portions of the jaws 21, 22 having the pressing surfaces 28 together.

## Claims

1. A portable electric pressing tool comprising an electric motor arranged at least partially within the handle of the tool and having a motor output shaft extending along a first axis along the handle, a pressing mechanism having a pair of jaws and which is operatively coupled to the motor output shaft via a transmission of the tool which in use causes relative movement of the jaws between first and second relative positions, the transmission comprising a bevel gear arrangement for redirecting torque flowing along the first axis into the bevel gear arrangement so that torque output from the bevel gear arrangement flows into a conversion mechanism of the transmission for converting torque into linear force along a second axis for causing said relative movement between the jaws, wherein the motor output shaft is arranged at an angle of 45 degrees to 135 degrees relative to the second axis.

2. The portable electric pressing tool of claim 1 wherein the motor output shaft is arranged at an angle of about 90 degrees relative to the second axis.

3. The portable electric pressing tool of claim 1 or 2 wherein the electric motor is located entirely within the handle of the tool.

4. The portable electric pressing tool of any preceding claim wherein the transmission comprises at least one planetary gear stage for transferring torque from the electric motor along the first axis in use, optionally wherein the at least one planetary gear stage is at least partially located within the handle of the tool, further optionally wherein the at least one planetary gear stage is entirely located within the handle of the tool.

5. The portable electric pressing tool of any preceding further comprising a battery attachment portion on the handle so that a notional line extending between the battery attachment portion and the motor output shaft extends along the first axis.

6. The portable electric pressing tool of any preceding claim wherein the conversion mechanism is a ball screw mechanism or a planetary roller screw mechanism.

7. The portable electric pressing tool of any preceding claim wherein the tool is configured to exert a force between the jaws ranging between 30kN to 60kN.

8. The portable electric pressing tool of any preceding claim wherein the tool is configured to have a weight in absence of a battery between 2.6kg to 3.5kg.

9. The portable electric pressing tool of any preceding claim wherein the tool is configured to have a weight to pushing force ratio between 0.043 kg/kN to 0.175kg/kN.

10. The portable electric pressing tool of any preceding claim wherein the tool is configured to have a length parallel to the second axis between 280mm to 335mm.

11. The portable electric pressing tool of any preceding claim wherein the tool is configured to have a height, in absence of a battery, perpendicular to the second axis of about 222mm.

12. The portable electric pressing tool of any preceding claim wherein the pair of jaws comprises a pair of jaws for compressing or crushing, optionally the jaws are crimping jaws.

13. The portable electric pressing tool of any of claims 1 to 11 wherein the pair of jaws comprises a pair of cutting jaws.

14. The portable electric pressing tool of any of claims 1 to 11 wherein the jaws are each configured to receive a removable insert for enabling the jaws to implement a crushing operation or a cutting operation depending on the nature of the inserts.

15. The portable electric pressing tool of any preceding claim wherein the electric motor is a brushless DC motor.
